# EUROPÄISCHE PATENTSCHRIFT

(11) **EP 1 820 823 B1**
(45) Veröffentlichungstag und Bekanntmachung des Hinweises auf die Patenterteilung: **27.08.2008**
(21) Anmeldenummer: 06405037.0
(22) Anmeldetag: 27.01.2006
(51) Int. Cl.: C08L 77/06, C08L 77/02, C08K 5/00, G02B 1/04

(54) **Photochrome Formmassen und daraus hergestellte Gegenstände**
Photochromic moulding compositions and articles made therefrom
Compositions de moulage photochromiques et articles préparés à partir de ces compositions

(43) Veröffentlichungstag der Anmeldung: 22.08.2007
(73) Patentinhaber: EMS-Chemie AG, 7013 Domat/Ems (CH)
(72) Erfinder: Lamberts, Nikolai, 7402 Bonaduz (CH); Bühler, Friedrich Severin, 7430 Thusis (CH); Hala, Ralph, 88161 Lindenberg (DE)
(74) Vertreter: Bremi, Tobias Hans

(56) Entgegenhaltungen:
- WO-A-96/37576
- WO-A-20/05030856

## Beschreibung

### TECHNISCHES GEBIET

Die vorliegende Erfindung betrifft photochrome Formmassen und daraus hergestellte Gegenstände wie z.B. ophthalmische Linsen, sowie Verfahren zur Herstellung solcher Gegenstände. Die Formmassen sind bevorzugt massegefärbt, ein Färben im Tauchbad oder über andere Einbringung/Dotierung des photochromen Farbstoffes ist aber ebenfalls möglich.

### STAND DER TECHNIK

Photochrome Formmassen sind Ausgangsmaterialien, welche zur Herstellung photochromer Gegenstände wie z.B. unter Lichteinflüssen reversibel tönende Sonnenbrillengläser o.ä. verwendet werden.

Photochrom bedeutet, dass der Farbstoff durch Lichteinfluss (UV oder kurzwelliges VIS) in einen angeregten Zustand übergeführt wird, wobei der Grundzustand und der angeregte Zustand unterschiedliche Absorptionsspektren aufweisen (vgl. Definition Photochromie in: Römpp Lexikon Chemie, 10. Auflage, S. 3303, Georg Thieme Verlag, Stuttgart). In der Regel ist der angeregte Zustand intensiv gefärbt, während die Ausgangsform farblos ist. Durch thermische oder strahlungsinduzierte Rückreaktion gelangt das angeregte Farbstoffmolekül wieder in den Grundzustand.

Mit diesen Farbstoffen lassen sich lichtinduzierte variable optische Filter herstellen, indem der Farbstoff z.B. in eine Kunststoffinatrix eingebracht wird (Massefärbung) oder indem eine Beschichtung mit Farbstoff auf Glas oder Kunststoff aufgebracht wird (zum Einbau solcher Farbstoffe in Polymere Matrices vgl. z.B. J.F. Rabek in "Mechanisms of Photophysical Processes and Photochemical Reactions in Polymers, Kapitel 10, Seiten 377 - 391).

Eine wichtige Anwendung sind ophthalmische Linsen, wie z.B. Sonnenbrillenlinsen oder -gläser, welche bei Sonneneinstrahlung selbständig dunkler werden. Damit diese Linsen den gewünschten Farbton erhalten, werden mehrere photochrome Farbstoffe und/oder ein oder mehrere inerte Farbstoffe zusammen mit dem photochromen verwendet. Bei Verwendung eines inerten Farbstoffes besitzt die Linse bereits im unbestrahlten Zustand eine Grundtönung oder Färbung, die die Transmission reduziert.

Ein wesentlicher Aspekt bei solchen Anwendungen ist, dass der reversibel photochrome Vorgang möglichst oft wiederholbar ist und der Farbstoff nicht durch Umwelteinflüsse (z.B. Sauerstoff) oder Nebenreaktionen (z.B. mit der Polymermatrix oder Additiven) unwiederbringlich aus diesem Kreislauf entfernt wird. Weiterhin ist Voraussetzung, dass der sogenannte Schaltvorgang (Anregung) und/oder die thermische Rückreaktion überhaupt innerhalb einer vertretbaren Zeitspanne so gut wie vollständig abläuft. Ist dies nicht gegeben, tönt sich die Linse bei Lichteinwirkung nicht (keine Reduktion der Transmission), und/oder die Linse behält ihre Tönung nach der Lichteinwirkung noch lange bei. Beides ist unerwünscht.

Bereits 1980 kamen erste photochrome Kunststofflinsen auf den Markt. Bis eine ausreichende Lebensdauer und ein zufriedenstellendes spektrales Verhalten des photochromen Systems erreicht wurde, mussten allerdings zahlreiche Verbesserungen an den Farbstoffen und den polymeren Matrices erzielt werden. Anfänglich basierten solche Kunststofflinsen praktisch ausschliesslich auf Gusssystemen, wie z.B. Allyldiglykolcarbonat CR39, das durch Polymerisation von Bisallylcarbonaten zugänglich ist. Später kamen Linsen auf Basis von (Meth)acrylaten und Polycarbonaten hinzu, und in letzter Zeit werden vermehrt Linsen auf thermoplastischem Weg produziert, wobei häufig thermoplastische Polyurethane (TPU) zum Einsatz gelangen.

In der Folge sollen einige Offenbarungen aus der Patentliteratur generellen Zusammenhang photochrom dotierter Kunststoffe vorgestellt werden. Dabei wird bewusst nicht auf die Vielzahl von Beschreibungen von Systemen wie CR39, welche in einem Gussverfahren mit einer Vernetzung zu Linsen verarbeitet werden, eingegangen, da die vorliegende Erfindung derartige Systeme nicht umfasst.

Die JP-A-63027837 beschreibt ein photochromes System, bei welchem eine PET (Polyethylenterephthalat)-Kunststoffmatrix, welche mit einem Weichmacher (2-15 Gew.-%) versetzt ist, mit einem photochromen Farbstoff dotiert ist. Durch diese Wahl der Matrix soll die Langzeitstabilität einer derartigen Schicht, welche z.B. auf einem Nylonfilm aufgebracht sein kann, unter ständigem Licht- und Hitzeeinfluss verbessert werden.

Die JP-A-01180536 beschreibt ebenfalls ein photochromes Material, welches hitzestabil und wetterbeständig sein soll. Es besteht aus einer Kunststoffmatrix, welche aus einem transparenten Kunststoff und einem Additiv, welches ein Polymer mit einem definierten Anteil von Monomeren mit Hydroxylgruppen, z.B. PVB (Polyvinylbutyral) oder Polyvinylacetat ist, besteht. Als transparenter Kunststoff wird eine Vielzahl von möglichen Systemen, so z.B. PMMA, PC, transparentes Nylon, etc. angegeben.

Die JP-A-01024740, wie die beiden bereits genannten Schriften aus dem Bereich der getönten Fahrzeugscheiben, beschreibt einen Mehrschichtaufbau aus zwei Glasschichten mit einer Zwischenschicht, welche ein photochromes Material enthält. Als transparentes Material dieser Zwischenschicht werden mehrere Möglichkeiten angegeben, u.a. Vinylharz, Acrylharz, Polyesterharz und Polyamidharz. Als Farbstoffe werden u.a. Spirooxazine genannt, und es wird als vorteilhaft hervorgehoben, die Farbstoffverteilung spezifisch vorzunehmen.

Die WO 01/49478 beschreibt eine photochrome Linse, welche aus einem PC-Träger und einer photochrom dotierten Beschichtung aus thermoplastischem Polyurethan (TPU) besteht. Diese Beschichtung wird in einem Hinterspritz-Verfahren auf einen Rohling aus PC aufgebracht.

### DARSTELLUNG DER ERFINDUNG

Der Erfindung liegt demnach u.a. die Aufgabe zugrunde, ein im Vergleich zu den Materialien des Standes der Technik verbessertes photochromes Material zur Verfügung zu stellen. Insbesondere handelt es sich um die Verbesserung derartiger Materialien auf Basis von Polyamiden.

Die Lösung dieser Aufgabe wird insbesondere dadurch erreicht, dass eine photochrome Polyamidformmasse bereitgestellt wird, welche wenigstens ein transparentes Homopolyamid und/oder Copolyamid in einem Gewichtsanteil von 50 - 99 Gew.-% enthält, wenigstens ein weiteres Polymer mit einem Glasübergangspunkt von weniger als 80°C in einem Gewichtsanteil von 1 - 50 Gew-.%, sowie wenigstens einen photochromen Farbstoff in einem Gewichtsanteil von 0.001 - 2.0 Gew-.%. Das Material kann dabei u.a. optional weitere Farbstoffe und/oder Additive enthalten. Das Material muss dabei nicht bereits mit photochromem Farbstoff versetzt sein, es ist auch möglich, die Mischung aus Polyamid und anderem Polymer mit den genannten Eigenschaften bzgl. Glasübergangspunkt vorzulegen und den Farbstoff nach oder während Herstellung eines Gegenstandes (z.B. Herstellung einer Linse in einem Spritzgussverfahren) in den Gegenstand einzubringen, z.B. in einem Tauchbad.

Das weitere Polymer verfügt bevorzugt mindestens über eine amorphe Phase, deren Glasübergangstemperatur respektive Glasübergangspunkt höchstens 80°C ist. Handelt es sich bei dem weiteren Polymer um ein Blockpolymer mit einem Weichsegment, so sollte die Glasübergangstemperatur des Weichsegmentes unterhalb von 40°C, bevorzugt unterhalb von 25°C liegen.

Der Begriff transparente Polyamide, wie er in dieser Schrift verwendet wird, soll Polyamide oder Copolyamide respektive daraus gebildete Formmassen bezeichnen, deren Lichttransmission wenigstens 70% beträgt, wenn das (Co)Polyamid (in reiner Form, d.h. ohne die oben angegebenen weiteren Bestandteile der erfindungsgemässen Formmasse) in Form eines dünnen Plättchens von 2mm Dicke vorliegt. Die Messung der Lichttransmission wird dabei auf einem UV/VIS Spektrometer der Firma Perkin Elmer im Bereich von 200 bis 800 nm and Rundplatten 70x2 mm durchgeführt. Der Transmissionswert wird für den Wellenlängenbereich zwischen 500 und 700 nm angegeben. Die Rundplatten 70x2 mm werden z.B. dafür auf einer Arburg Spritzgussmaschine im polierten Werkzeug hergestellt, wobei die Zylindertemperatur zwischen 200 und 340 °C und die Werkzeugtemperatur zwischen 20 und 140 °C liegt. Als transparente Polyamide in diesem Sinne kommen beispielsweise Polyamide und/oder Copolyamide in Frage, wie sie in der DE-A-102 24 947, der DE-A-101 22 188, der CH-A-688 624 oder der EP-A-0 725 100 beschrieben sind, oder Mischungen davon in Frage.

Einer der Vorteile der Verwendung von Polyamiden als Basismaterial ist, dass im Gegensatz zu den Materialien wie CR39 oder Acrylat, welche bisher zur Herstellung von ophthalmischen Linsen verwendet wurden, und welche Materialien klassische Gussverfahren und eine dabei erfolgende Polymerisation (Vernetzung) erforderlich machten, transparente Polyamide (amorph oder mikrokristallin) in einfachen Spritzgiessverfahren bei hohen Zykluszeiten, d.h. in kostengünstiger Massenproduktion, verarbeitet werden können. Die erfindungsgemässe Polyamidformmasse ist somit auch bevorzugtermassen nicht vernetzbar.

Bevorzugtermassen ist die Mischung aus dem transparenten Homopolyamid und/oder Copolyamid in einem Gewichtsanteil von 70-99, insbesondere bevorzugt 80-98 Gew.-% und aus wenigstens einem weiteren Polymer mit einem Glasübergangspunkt von weniger als 80 oder 40°C in einem Gewichtsanteil von 1-30, insbesondere bevorzugt 2-20 Gew.-% (d.h. ohne Farbstoff) vorliegend, und bevorzugtermassen ebenfalls im wesentlichen gleich transparent im obigen Sinne oder nicht mehr als 10 oder bevorzugt 5% weniger transparent als im obigen Sinne. Für optisch weniger hochwertige Bauteile, oder für Bauteile, bei welchen die photochromen Prozesse nur in Reflexion relevant sind (beispielsweise Dekorationsartikel) ist auch eine niedrigere Transparenz und sogar eine leichte Trübung möglich. Für optisch hochwertige Bauteile ist eine Transmission von mehr als 70%, bevorzugt von mehr als 80%, im Wellenlängenbereich von 500-700 nm (gemessen bei einer Schichtdicke von 2 mm) bevorzugt und/oder ein Haze von weniger als 5 oder sogar 3, bevorzugt von weniger als 2 (ASTM 1003, Schichtdicke 2 mm).

Vor einigen Jahren gelang es zwar, auch amorphe Polyamide in der für optische Anwendungen erforderlichen Reinheit herzustellen, so z.B. Polyamide des Typs MACM12 wie in der DE-A-196 42 885 beschrieben und unter dem Handelsnamen Grilamid TR 90 von EMS CHEMIE, Schweiz, erhältlich, der einfache Zusatz eines photochromen Farbstoffes ist aber bei solchen reinen Systemen nicht mit befriedigenden photochromen Resultaten der daraus hergestellten Linsen möglich.

Dabei steht MACM für die ISO-Bezeichnung Bis-(4-amino-3-methyl-cyclohexyl)-methan, welches unter dem Handelsnamen 3,3'-Dimethyl-4-4'-diaminodicyclohexylmethan als Laromin C260-Typ (CAS Nr. 6864-37-5) kommerziell erhältlich ist. Die Ziffer 12 steht eine aliphatische lineare C12 Dicarbonsäure (DDS, Dodecandisäure), mit welcher das Diamin MACM polymerisiert ist.

Überraschenderweise zeigt es sich, dass, im Gegensatz zu den bisherigen Erfahrungen, dass bei Zufügung von photochromen Farbstoffen zu transparenten Polyamiden kein befriedigendes photochromes Verhalten resultiert, das erfindungsgemässe Material bei Verarbeitung zu photochromen Gegenständen unerwartet langlebiges, d.h. oft wiederholbares, reversibles photochromes Verhalten zeigt. Zudem gehören die bevorzugten Farbstoffe zu den beständigsten photochromen Systemen. Der Schaltvorgang (Anregung) verläuft ausserdem schnell und die thermische Rückreaktion läuft ebenfalls in einem sinnvollen Zeitraum von Sekunden bis höchstens wenigen Minuten nahezu vollständig ab.

Normalerweise zeigen nur reine, d.h. nicht als Mischung vorliegende Polyamid-Materialien mit einem Glasübergangspunkt unterhalb von 100 °C ein ausgeprägtes photochromes Verhalten (so z.B. MACM36 oder PACM36, wobei PACM steht für die ISO-Bezeichnung Bis-(4-amino-cyclohexyl)-methan, welches unter dem Handelsnamen 4,4'-Diaminodidyclohexymethan als Dicykan-Typ (CAS Nr. 1761-71-3) kommerziell erhältlich ist). Diese sind aber in der Regel aufgrund ihrer mangelhaften mechanischen oder thermischen Eigenschaften ungeeignet z.B. für ophthalmische Linsenanwendungen. Die Zufügung eines weiteren Polymers zu einem transparenten (Co)Polyamid neben dem Farbstoff ist möglich. An diese Polymere resp. das resultierende Gemisch (Blend) werden aber besonders für ophthalmische Linsenanwendungen hohe Anforderungen gestellt, und normalerweise resultiert beim Beimischen eine Trübung des Blend. Die optischen Kennwerte (Transmission, Haze, Abbe-Zahl) der Mischungen (Blends) sollten aber nicht wesentlich unter jenen der reinen Polyamide liegen. Der photochrome Prozess sollte über eine gute Kinetik (Abdunkeln und Fading innerhalb von Sekunden bis wenigen Minuten, bevorzugt innerhalb von 20 - 60 Sekunden) verfügen und über eine grosse Lebensdauer ablaufen. Dies ist bei den vorgeschlagenen Materialien resp. den daraus hergestellten Gegenständen der Fall. Wie bereits erwähnt, treten diese guten Eigenschaften der massegefärbten Gegenstände auch dann auf, wenn der Gegenstand aus dem Blend ohne Farbstoff gefertigt wird und der Farbstoff nach dem Urformen des Gegenstandes z.B. in einem Tauchbad eingebracht wird. Durch die Anwesenheit des anderen Polymers mit niedrigem Glasübergangspunkt neben dem transparenten Polyamid wird für die photochromen Farbstoffe eine Umgebung geschaffen, welche die meist bei der Anregung der Farbstoffe auftretenden und für die Farbänderung i.d.R. erforderlichen Konfigurations- und/oder Konformationsänderungen reversibel zulassen.

Nach einer ersten bevorzugten Ausführungsform ist die Polyamidformmasse dadurch gekennzeichnet, dass das weitere Polymer einen Glasübergangspunkt von weniger als 30°C, bevorzugt von weniger als 25°C aufweist. So kann eine optimale Kinetik der Photochromie erhalten werden. Gute Werte werden insbesondere erhalten, wenn das weitere Polymer einen Glasübergangspunkt von weniger als 0°C, bevorzugt im Bereich von (-60) - (-20) °C aufweist.

Eine weitere bevorzugte Ausführungsform mit ausgezeichneter Kinetik ist dadurch ausgezeichnet, dass das weitere Polymer ein Polyamid auf Basis von cycloaliphatischen Diaminen und aliphatischen Dicarbonsäuren mit 6 bis 40 Kohlenstoffatomen, insbesondere bevorzugt mit 20 bis 36 Kohlenstoffatomen, ist, wobei es sich beim cycloaliphatischen Diamin bevorzugt um MACM und/oder PACM und beim Polyamid als Ganzes insbesondere bevorzugt um MACM36 und/oder PACM36 handelt, und/oder dass das weitere Polymer ein Blockcopolymer mit Weichsegmenten ist, wobei bevorzugt die Weichsegmente einen Glasübergangspunkt von weniger als 40°C bevorzugt von weniger als 25° C aufweisen. Es kann sich beim weiteren Polymer z.B. um ein Polyamid Blockcopolymeres mit Weichsegmenten, bevorzugt um ein Polyamid-12 Blockcopolymeres handeln, wobei es sich bei den Weichsegmenten bevorzugt um Polyether- und/oder Polyester- und/oder Polysiloxan- und/oder Polyolefin- und/oder Polyacrylat- Weichsegmente handelt. Bei den Polyethersegmenten werden solche bevorzugt, die auf den Monomeren Ethylenoxid und/oder Propylenoxid und/oder Tetrahydrofuran basieren.

Mögliche andere weitere Polymere sind auch Polyester- und TPU-Elastomere mit Weichsegmenten, wie sie bereits weiter oben im Zusammenhang mit Polyamid-Blockpolymeren beschrieben wurden. Ebenfalls möglich sind andere weitere Polymere, solange sie die oben angegebenen Bedingungen an den Glasübergangspunkt erfüllen, so beispielsweise Acrylatpolymere, Methacrylatpolymere (insbesondere bevorzugt mit langen Seitengruppen), Polycarbonat-Copolymere, Styrol-Copolymere (bevorzugt auf Basis von Acrylnitril, Butadien, Acrylester, Methacrylester), Polyolefine, insbesondere gepfropfte, Ethylencopolymere (auf Basis von Propen, Buten, Penten, Hexen, Octen, Decen, Undecen, Butadien, Styrol, Acrylnitril, Isopren, Isobutylen, Derivate der (Meth)acrylsäure, Vinylacetat, Tetrafluorethylen, Vinylidenfluorid, Hexafluorpropen und 2-Chlorbutadien), Polyisobutylen, Polybutylacrylat und andere.

Beim transparenten Homopolyamid und/oder Copolyamid handelt es sich gemäss einer bevorzugten Ausführungsform um ein Polyamid auf Basis von cycloaliphatischen Diaminen und aliphatischen Dicarbonsäuren mit 6 bis 36 Kohlenstoffatomen oder eine Mischung solcher Homopolyamide und/oder Copolyamide. Hervorragende Transparenzwerte bei guter Photochromie werden z.B. erhalten, wenn es sich bei den cycloaliphatischen Diaminen um MACM und/oder PACM handelt und/oder wenn es sich bei der aliphatischen Dicarbonsäure um eine aliphatische Dicarbonsäure mit 10, 12 oder 18 Kohlenstoffatomen handelt. So kann es sich beispielsweise beim transparenten Polyamid um ein Homopolyamid ausgewählt aus der Gruppe MACM12 (z.B. Grilamid TR 90, vgl. weiter unten), MACM 18 und/oder um ein Copolyamid ausgewählt aus der Gruppe MACM12/PACM12, MACM18/PACM18 handeln. Der Brechungsindex solcher Systeme ist bevorzugtermassen grösser oder gleich 1.50, die Abbe Zahl grösser oder gleich 40, die Dichte kleiner oder gleich 1.1 g/cm³.

Auch ist es vorteilhaft möglich, dass es sich beim transparenten Homopolyamid und/oder Copolyamid um ein Polyamid auf Basis von aromatischen Dicarbonsäuren mit 8 bis 18 Kohlenstoffatomen oder eine Mischung solcher Homopolyamide und/oder Copolyamide handelt, bevorzugt auf Basis von Lactamen und/oder Aminocarbonsäuren, wobei es sich bei den aromatischen Dicarbonsäuren z.B. um TPS (Terephthalsäure) und/oder IPS (Isophthalsäure) handelt. Das transparente Homopolyamid und/oder Copolyamid kann vorteilhafterweise ein Polyamid ausgewählt aus der Gruppe: 6I6T, TMDT, 6I/MACMI/MACMT, 6I/6T/MACMI, MACMI/MACM36, 6I, Lactamhaltige Polyamide wie 12/PACMI, 12/MACMI, 12MACMT, 6/PACMT, 6/6I,6/IPDT oder eine Mischung davon sein. Dabei steht jeweils I für Isophthalsäure und T für Terephthalsäure, TMD für Trimethylhexamethylendiamin, IPD für Isopherondiamin, und die Ziffern für die jeweiligen Diamine, d.h. 6 für Hexamethylendiamin.

Weiter ist es vorteilhaft und möglich, dass es sich beim transparenten Homopolyamid und/oder Copolyamid um ein Polyamid auf Basis wenigstens einer Dicarbonsäure und wenigstens eine Diamins mit einem aromatischen Kern handelt, bevorzugt auf Basis von MXD (meta-Xylylendiamin), wobei die Dicarbonsäure aromatisch und/oder aliphatisch sein kann, und wobei es sich z.B. bevorzugt um 61/MXDI handelt.

Der Brechungsindex solcher Systeme und generell des transparenten Homopolyamid und/oder Copolyamid ist bevorzugtermassen grösser oder gleich 1.59, die Abbe Zahl grösser oder gleich 25, die Dichte kleiner oder gleich 1.3 g/cm³. Bevorzugtermassen beträgt die Lösungsviskosität oder relative Viskosität ηᵣₑₗ (nach DIN EN ISO 1628-1) zwischen 1.3 und 2.0, insbesondere zwischen 1.40 und 1.85. Weiterhin liegt der Glasübergangspunkt T_{g} des transparenten Homopolyamid und/oder Copolyamid normalerweise oberhalb von 90°C, bevorzugt oberhalb von 110°C, insbesondere bevorzugt oberhalb von 130°C.

Eine weitere bevorzugte Ausführungsform ist dadurch gekennzeichnet, dass es sich beim photochromen Farbstoff um einen Farbstoff handelt, welcher reversibel mit UV oder kurzwelligem VIS anregbar ist, wobei es sich bevorzugt um einen Farbstoff auf Basis von Spirooxazinen handelt. Anregbar heisst, dass er durch die Anregung in einen Zustand gebracht werden kann, in welchem sich sein Absorptionsspektrum derart verändert, dass eine Absorption des sichtbaren Lichtes stattfindet, wenn der Farbstoff in der Matrix aus Polymer eingebettet ist, d.h. im erfindungsgemässen Blend aus transparentem Polyamid und anderem Polymer mit dem oben angegebenen Glasübergangspunkt. Durch die Wahl der photochromen Farbstoffe und Einstellen der Konzentration lässt sich die erzielbare Filterwirkung im sichtbaren Spektralbereich in weiten Bereichen einstellen. So lässt sich eine Reduktion der ursprünglichen Transmission (in der Regel 80 - 92 %) auf 40% oder gar 10% vollständig reversibel erreichen (jeweils gemessen an planparalleler Platte von 1 bzw. 2 mm Dicke).

Weitere mögliche Farbstoffe, welche als photochrome Systeme eingebaut werden können, sind z.B. in Kirk-Othmer Encyclopedia of Chemical Technology Vol. 6, "Chromogenic Materials, Photochromic", Seiten 587-605, John Wiley and Sons, Inc., oder auch in: Heinz Dürr, Henri Bouas-Laurent (Eds.), Photochromism: Molecules and Systems, Elsevier 2003. Möglich sind insbesondere auch Systeme wie in der DE-A-36 22 871 beschrieben, wie in der WO 2005/030856 beschrieben, oder wie in der EP-A-0 313 941 beschrieben.

Bei den oben erwähnten, optional vorhandenen Additiven kann es sich u.a. um Stabilisatoren wie UV-Stabilisatoren, Hitzestabilisatoren, Radikalfänger und/oder um Verarbeitungshilfsstoffe, Weichmacher, weitere Polymere oder um Kombinationen oder Mischungen davon handeln. Des weiteren können die Formmassen nanoskalige Füll- und/oder Funktionsstoffe, wie zum Beispiel Schichtmineralien oder Metalloxide, die den Brechungsindex ophthalmischer Linsen erhöhen, beinhalten.

Weiterhin betrifft die Erfindung einen trübungsfreien Gegenstand mit wenigstens einem Bereich oder einer Schicht aus einer Polyamidformmasse, wie sie oben angegeben wurde. Bevorzugtermassen handelt es sich dabei um eine Folie, ein Einlegeteil, ein Profil, ein Rohr, einen Hohlkörper oder einen optisch variablen Filter oder besonders bevorzugt eine optische Linse handelt, insbesondere bevorzugt um eine ophthalmische Linse.

Der Gegenstand, d.h. insbesondere die ophthalmische Linse ist bevorzugt gradientengefärbt und/oder besitzt eine photochrome Beschichtung, eine Antireflexionsbeschichtung, eine Kratzschutzbeschichtung, eine optische Filterbeschichtung, eine polarisierende Beschichtung, eine Sauerstoffbarrierebeschichtung oder Kombinationen solcher Beschichtungen.

Insbesondere für hochwertige optische Anwendungen wie beispielsweise als ophthalmische Linsen erweist es sich als vorteilhaft, wenn ein Gegenstand aus der Polyamidformmasse einen Glasübergangspunkt oberhalb von 90°C oder 100°C, bevorzugt oberhalb von 130°C, insbesondere bevorzugt oberhalb von 150°C, aufweist.

Zudem betrifft die vorliegende Erfindung ein Verfahren zur Herstellung eines Gegenstandes wie oben angegeben, insbesondere bevorzugt einer ophthalmischen Linse, welches dadurch gekennzeichnet ist, dass eine Polyamidformmasse wie oben angegeben in einem Extrusionsverfahren, einem Spritzgussverfahren oder einem Hinterspritzen zum Gegenstand geformt wird, wobei der photochrome Farbstoff schon vorgängig und/oder ggf. in einem nachgeschalteten Tauchbadverfahren und/oder Thermotransferverfahren (oder eine anderes Dotierverfahren) in die Mischung aus transparentem Polyamid und weiterem Polymer eingebracht werden kann. Beim photochromen Gegenstand kann es sich auch um eine photochrome Folie handeln, welche auf einen Träger, bevorzugt eine konventionelle, nicht photochrom ausgerüstete optische Linse, durch Kaschieren, Laminieren oder Kleben aufgebracht werden kann.

Ein solches Verfahren zur Herstellung eines massegefärbten Gegenstandes kann beispielsweise dadurch gekennzeichnet sein, dass der photochrome Farbstoff zusammen mit dem transparenten Homopolyamid und/oder Copolyamid und dem weiteren Polymer compoundiert wird, wobei der Farbstoff beispielsweise in Form eines flüssigen Konzentrates mit Hilfe einer Dosierpumpe der Polymerschmelze aus transparentem Homopolyamid und/oder Copolyamid und weiterem Polymer zugesetzt werden kann und/oder der Farbstoff als Feststoff auf den übrigen Komponenten aufgetrommelt wird, wobei gegebenenfalls zusätzlich noch Anrollhilfsstoffe zum Einsatz kommen können. Auch ist es möglich, dass der Farbstoff und das weitere Polymere zu einem Masterbatch mit hoher Farbkonzentration von bevorzugt bis 30% verarbeitet wird, und dieser Masterbatch in der erforderlichen Menge mit dem transparenten Polyamid und/oder Copolyamid in einem Extruder zu Granulat verarbeitet wird oder direkt in der Spritzgussmaschine in das fertige Formteil übergeführt wird.

Die vorgeschlagene Polyamidformmasse kann Verwendung finden beispielsweise als Bestandteil oder Beschichtung von Elementen mit spektraler Filterwirkung wie beispielsweise als Brillenglas, Sonnenlinse, Korrekturlinse, optischer Filter und als Schaltaggregat zur optischen Signalverarbeitung, Skibrille, Visier, Schutzbrille, Fotorecording, Display, optischer Datenspeicher, Fenster von Gebäuden und Fahrzeugen. Andererseits auch im Zusammenhang mit Dekorationselementen oder Strukturelementen wie beispielsweise als Brillenfassung, Spielzeug, Abdeckung, insbesondere als Mobiltelefongehäuse, Teil von elektronischen Geräten, Beschichtung insbesondere von Verpackungen, Dekorationsartikeln, Sportgeräten, Verkleidungen bevorzugt im Automobilbereich. Bei letztern Anwendungen ist es gegebenenfalls genügend, wenn die Photochromie nicht in Transmission sondern in Reflexion genügend ausgebildet ist.

Weitere Ausführungsformen sind in den abhängigen Ansprüchen beschrieben und in die Beschreibung eingeschlossen.

### WEGE ZUR AUSFÜHRUNG DER ERFINDUNG

Die Erfindung soll anfolgend anhand von Ausführungsbeispielen erläutert werden. Die Beispiele sollen dazu dienen, aufzuzeigen, wie eine Polyamidformmasse hergestellt und z.B. zu einem Formling verarbeitet werden kann, sie sollen aber nicht dazu ausgelegt werden, den Schutzgegenstand, wie er in den angefügten Patentansprüchen definiert ist, einschränkend auszulegen.

### Beispiele 1 bis 13 und Vergleichsbeispiele (VB) 1 bis 5:

Zunächst wurden die Polymermischungen, bestehend aus transparentem Polyamid und einem Blockcopolymer als weiteres Polymer auf einem Doppelwellenextruder Collin Teach-Line ZK25T L/D=18 hergestellt. Die Zylindertemperaturen betrugen mit Ausnahme der Einzugszone zwischen 200 und 280°C, die Schneckendrehzahl 120-250 Upm.

Die Spirooxazin-Farbstoffe (OP 14 BLUE, OP 19 RED) wurden mit Hilfe von Tween 20 (0.05 Gew.-%) auf die Granulate der transparenten Polyamide bzw. der Polymermischungen auf Basis der transparenten Polyamide aufgetrommelt. Anschliessend wurden diese Mischungen auf einer Arburg Allrounder 350-90-220D Spritzgussmaschine zu Platten der Dimension 30x30x1 mm verarbeitet, wobei die Zylindertemperaturen zwischen 200-260°C und die Formtemperatur zwischen 20 und 60 °C lagen. Die Schneckendrehzahl betrug 150-400 Upm.

Die Zusammensetzungen der in den einzelnen Beispielen zum Einsatz kommenden photochromen Polyamidformmassen sind in den Tabellen 1 und 2 und die der Vergleichsbeispiele in Tabelle 3 zusammengefasst.

**Tabelle 1: Photochrome Polyamidformmassen der Beispiele 1 bis 9 (Zusammensetzung in Gew.-%)**

| **Beispiel** | **1** | **2** | **3** | **4** | **5** | **6** | **7** | **8** | **9** |
|---|---|---|---|---|---|---|---|---|---|
| GRILAMID TR 90 | 89.8 | 89.8 | 89.8 | 69.8 | 89.8 | 89.6 | 89.8 | 89.8 | 89.8 |
| MACM 36 | | | | | | | | | 10.0 |
| GRILAMID ELY 2475 | 10.0 | | | | | | | | |
| GRILAMID ELY 2694 | | 10.0 | | | | | | | |
| FE 7334 | | | 10.0 | 30.0 | 10.0 | 10.0 | | | |
| PEBAX 5033 | | | | | | | 10.0 | | |
| PEBAX 7033 | | | | | | | | 10.0 | |
| OP 14 Blue | 0.2 | 0.2 | 0.2 | 0.2 | 0.4 | 0.2 | 0.2 | 0.2 | 0.2 |
| OP 19 Red | | | | | | 0.2 | | | |
| | | | | | | | | | |
| Photochromes Verhalten | + | + | + | ++ | ++ | ++ | ++ | + | + |
| Transmission (%) 600 nm im Grundzustand | 86 | 88 | 87 | 83 | 81 | 82 | 87 | 87 | 82 |
| Transmission (5) 600 nm im angeregten Zustand *) | 62 | 65 | 60 | 40 | 42 | 43 | 54 | 65 | 58 |
| Haze im Grundzustand | 2.2 | 2.2 | 1.9 | 3.7 | 1.9 | 1.9 | 2.2 | 2.4 | 2.6 |

| | | | | | | | | | |
|---|---|---|---|---|---|---|---|---|---|
| *) Bestrahlungsdauer: 30 Sekunden | | | | | | | | | |

**Tabelle 2: Photochrome Polyamidformmassen der Beispiele 10 bis 13 (Zusammensetzung in Gew.-%):**

| **Beispiel** | **10** | **11** | **12** | **13** |
|---|---|---|---|---|
| GRILAMID TR 90 | 89.8 | | 89.75 | 89.8 |
| MACM 18 | | 89.8 | | |
| PACM 36 | 10.0 | | | |
| FE 7334 | | 10.0 | 10.0 | 10.0 |
| Tinuvin 326 | | | 0.05 | |
| Polyshine Blue I | | | | 0.2 |
| OP 14 Blue | 0.2 | 0.2 | 0.2 | |
| | | | | |
| Photochromes Verhalten | ++ | + | + | ++ |
| Transmission (%) 600 nm im Grundzustand | 85 | 84 | 82 | 61 |
| Transmission (5) 600 nm im angeregten Zustand *) | 33 | 56 | 55 | 28 |
| Haze im Grundzustand | 2.8 | 2.5 | 1.9 | 2.0 |

| | | | | |
|---|---|---|---|---|
| *) Bestrahlungsdauer: 30 Sekunden | | | | |

Die in den Tabellen verwendete Bewertung des photochromen Verhaltens mit den Symbolen --, -, o, + und ++ beruht auf einer qualitativen Einschätzung von Auge, wobei sich diese stützt auf die Schnelligkeit des Einfärbens und des Entfärbens (Kinetik) sowie auf die erreichbare Farbtiefe nach der Bestrahlung.

Die optische Filterung bei Brillenlinsen verfolgt zwei Funktionen. Zum einen wird die ins Auge treffende Lichtintensität reduziert und zum anderen der Zutritt von gefährlicher UV-Strahlung zum Auge verhindert. Da die meisten photochromen Farbstoffe intensive Absorptionsbanden im UV-A und UV-B Bereich besitzen, genügen bereits tiefe Konzentrationen an weiteren UV-Absorbern (UV-Blocker) wie z. B. Tinuvin 326, um eine für Brillenlinsen ausreichend hohe Absorption im UV-Bereich zu erzielen (Beispiel 12). So genügen in Beispiel 12 bereits 0.05 Gew.-% Tinuvin 326, um einen ausgeprägten UV-cutoff bei 390 nm zu erreichen.

**Tabelle 3: Vergleichsbeispiele VB1 bis VB5 (Zusammensetzung in Gew.-%):**

| **Beispiel** | **VB1** | **VB2** | **VB3** | **VB4** | **VB5** |
|---|---|---|---|---|---|
| GRILAMID TR 90 | 99.8 | | | | |
| MACM 18 | | 99.8 | | | |
| MACM 36 | | | | 99.8 | |
| PACM 36 | | | 99.8 | | |
| GRILAMID ELY 2475 | | | | | 99.8 |
| OP 14 Blue | | | 0.2 | 0.2 | 0.2 |
| | | | | | |
| Photochromes Verhalten | - | - | ++ | ++ | ++ |
| Transmission (%) 600 nm im Grundzustand | 78 | 85 | 86 | 90 | 73 |
| Transmission (5) 600 nm im angeregten Zustand *) | 70 | 78 | 36 | 46 | 30 |
| Haze im Grundzustand | 1.6 | 2.2 | 2.5 | 2.9 | n.b. |

| | | | | | |
|---|---|---|---|---|---|
| *) Bestrahlungsdauer: 30 Sekunden n.b. : nicht bestimmt | | | | | |

Aus Tabelle 3 kann abgeleitet werden, dass die Vergleichsbeispiele VB3, VB4 sowie VB5 hinsichtlich der photochromen Eigenschaften positive Resultate zeigen, die Materialien sind aber hinsichtlich der mechanischen Eigenschaften für die erfindungsgemässen Anwendungen nicht geeignet. Gegenstände respektive Schichten hergestellt aus Formmassen entsprechend VB4-VB6 sind zu weich, beziehungsweise haben eine zu geringe Wärmeformbeständigkeit für solche Anwendungen.

Die optischen Messungen wurden auf einem Datacolor SF 600Plus Farbmessgerät durchgeführt. Zur Anregung der Farbstoffe wurde ein LED-Panel (10x8 Dioden) mit einem Emissionsmaximum von ca. 415 nm (Halbwertsbreite ca. 50nm) verwendet, wobei eine Spannung von 27 V bei einem Strom von 0.05 Ampere angelegt wurden. Dieses Verfahren wurde gewählt, da durch diese Einstrahlung eine gleiche Wirkung in Bezug auf den photochromen Effekt erreicht wurde, wie dies bei der natürlichen Sonneneinstrahlung bei wolkenlosem Himmel am Standort der Anmelderin im Januar der Fall ist. Die spektralen Untersuchungen wurden bei einer Temperatur von 20°C durchgeführt, die Kinetik des Abdunkelns und des Fadings ist bekanntermassen temperaturabhängig.

Die Platten wurden zunächst unbestrahlt in den Strahlengang der Blitzlampe (Messmodus Transmission) gebracht und das Absorptionsspektrum zwischen 400 und 700 nm gemessen. Danach wurde die Platte mittels des LED-Panels für 30 sec bestrahlt und unmittelbar nach Entfernen der Strahlungsquelle das Absorptionsspektrum aufgenommen. Für die hier angestellten Betrachtungen liefert das so gemessene Absorptionsspektrum die maximal erreichbare Abdunklung (Farbsättigung). Aufgrund der zum Teil sehr schnellen Rückreaktion des Farbstoffes in seine farblose Form, womit Aufhellung oder Entfärbung der Platte eintritt, liegt die so bestimmte maximale Abdunklung aber deutlich über der real vorliegenden Sättigung, die unter Bestrahlung erreicht wurde, da bis zur eigentlichen spektralen Messung bis zu 2 Sekunden vergehen können. Es ist verständlich, dass gerade im Zustand der maximalen Abdunklung, bei der die höchste Konzentration an angeregten Farbstoffmolekülen vorliegt, auch die Rückreaktion am schnellsten erfolgt.

Um die Geschwindigkeit der Entfärbung (Fading) zu messen, wurde das Absorptionsspektrum zu verschiedenen Zeiten nach Entfernen der Strahlungsquelle aufgenommen. Die zu verschiedenen Zeitpunkten bestimmten Transmissionswerte bei einer Wellenlänge von 600 nm sind für Beispiele 3 bis 9 in den Tabellen 4 und 5 zusammengefasst. Als Vergleich dient die im Handel befindliche Linse Airwear® T5G der Firma ESSILOR, Frankreich. Bei dieser Linse handelt es sich um eine Kunststofflinse (2 mm Dicke), welche aus Polycarbonat besteht. Die Linse ist entweder tauchbadgefärbt oder mit einem photochromen Lack beschichtet. Die Transmission dieser Linse wurde wegen der charakteristischen Lage der Absorptionsbanden bei 580 nm bestimmt.

Bei deutlich längerer Bestrahlung mit dem LED-Panel resultiert eine stärkere Abdunkelung (Sättigung) als dies in den Werten der Tabellen 1-3 zum Ausdruck kommt. Beispielsweise reduziert sich die Transmission im Beispiel 3 von 60% auf 55%, wenn die Bestrahlungsdauer von 30 auf 120 Sekunden ausgedehnt wird.

**Tabelle 4: Transmission (%) bei 600 nm gemessen an Platten 30x30x1 mm in Abhängigkeit der Zeit (Fading); Platten wurden zuvor mit dem LED-Panel für 30 Sekunden bestrahlt; "O Sekunden" stellt also die erste Messung nach Ende der Bestrahlung dar.**

| **Zeit (Sekunden)** | **Platte aus der Formmasse von Beispiel 3** | **Platte aus der Formmasse von Beispiel 4** | **Platte aus der Formmasse von Beispiel 5** | **Platte aus der Formmasse von Beispiel 6** |
|---|---|---|---|---|
| 0 | 60 | 40 | 42 | 43 |
| 10 | 70 | 67 | 55 | 67 |
| 20 | 75 | 75 | 60 | 70 |
| 30 | 79 | 76 | 63 | 72 |
| 60 | 82 | 78 | 65 | 75 |
| 120 | 83 | 79 | 67 | 77 |
| 240 | 84 | 80 | 70 | 78 |
| 480 | 85 | 81 | 72 | 79 |
| 600 | 85 | 81 | 74 | 80 |
| 1200 | 86 | 82 | 77 | 81 |
| 1800 | 86 | 83 | 79 | 82 |
| Zeit bis Abdunklung auf 20% zurückgegangen ist | 150 sec | 20 sec | 530 sec | 50 sec |

**Tabelle 5: Transmission (%) bei 600 nm gemessen an Platten 30x30x1 mm in Abhängigkeit der Zeit (Fading); Platten wurden zuvor mit dem LED-Panel für 30 Sekunden bestrahlt; "O Sekunden" stellt also die erste Messung nach Ende der Bestrahlung dar.**

| **Zeit (Sekunden)** | **Platte aus der Formmasse von Beispiel 7** | **Platte aus der Formmasse von Beispiel 8** | **Platte aus der Formmasse von Beispiel 9** | **Vergleichslinse Airwear ® T5G (ESSILOR)** |
|---|---|---|---|---|
| 0 | 54 | 65 | 58 | 43 |
| 10 | 64 | 74 | 66 | 50 |
| 20 | 70 | 76 | 68 | 56 |
| 30 | 74 | 77 | 70 | 62 |
| 60 | 77 | 79 | 72 | 73 |
| 120 | 78 | 80 | 74 | 86 |
| 240 | 79 | 81 | 76 | 88 |
| 480 | 80 | 82 | 77 | 88 |
| 600 | 82 | 83 | 78 | 89 |
| 1200 | 84 | 84 | 80 | 90 |
| 1800 | 86 | 85 | 81 | 91 |
| Zeit bis Abdunklung auf 20% zurückgegangen ist | 450 sec | 650 sec | 480 sec | 90 sec |

Einen Eindruck, wie rasch die verschiedenen Testkörper in den farblosen Zustand zurückkehren, vermittelt die in den Tabellen 4 und 5 ebenfalls angegebene Zeitspanne, innerhalb der die Abdunklung (Transmission im Grundzustand minus Transmission bei Farbsättigung) um 80% zurückgeht. Interessant ist, dass durch Wahl des zugesetzten Polymers diese Zeitspanne für die Aufhellung der photochromen Polyamidzusammensetzungen in weiten Bereichen gesteuert werden kann. In den vorliegenden Beispielen werden Werte zwischen 20 und 650 Sekunden realisiert.

Der Haze wurde bei 23°C mit einem Haze-Gard Plus der Firma Byk-Gardener nach ASTM D-1003 (Lichtart C) bestimmt.

Das Herstellungsverfahren der Platten von 1 mm Dicke wie in den obigen Tabellen angegeben ist für besonders hochwertige optische Anwendungen gegebenenfalls nicht repräsentativ, da die verwendeten Werkzeuge für solche hochstehenderen Anwendungen nicht den Anforderungen genügen. Zum Vergleich wurde entsprechend das oben genannte Beispiel 3, das heisst die Formmasse gemäss Beispiel 3, unter Verwendung eines für hochwertige optische Zwecke noch besser geeigneten Werkzeugs (poliert und unter idealen Spritzgussbedingungen) nochmals zu einer planen 2 mm Platte verarbeitet. Im unbestrahlten Zustand ergaben sich dabei folgende Werte: Transmission = 89%, Haze = 1.1. Mit anderen Worten resultiert bei optimaler Fertigung der Formkörper eine noch höhere Transmission und ein noch kleinerer Hazewert (im unbestrahlten Zustand).

Das unter anderem im Beispiel 3 eingesetzte transparente Polyamid hat einen Glasübergangspunkt von 155°C. Der Blend mit 10% FE 7334 besitzt einen Glasübergangspunkt von 151°C. Damit lässt sich die deutliche Verbesserung des photochromen Effektes nicht allein durch die makroskopische Grösse der Glasübergangstemperatur erklären, wie dies naheliegender Weise getan würde, denn diese wurde durch die Mischung gerade einmal um 4°C reduziert. Vielmehr muss die lokale Segmentbeweglichkeit am Ort der Farbstoffinoleküle signifikant erhöht werden, um den gewünschten Effekt zu erzielen. Die höhere lokale Beweglichkeit oder die reduzierte lokale Viskosität wird durch flexible Hauptketten-Abschnitte oder flexible Seitenketten des weiteren Polymers bewirkt.

Eine Zusammenstellung der Eigenschaften von reinem Grilamid TR90 und der Mischung gemäss Beispiel 3 ist in Tabelle 6 angegeben.

**Tabelle 6: Vergleich der mechanischen Eigenschaften von Grilamid TR 90 in reiner Form und Beispiel 3:**

| **Eigenschaft** | **Norm** | **Einheit** | **TR 90** | **Mischung aus Beispiel 3** |
|---|---|---|---|---|
| Zug-E-Modul | ISO 527 | MPa | 1600 | 1350 |
| Streckspannung | ISO 527 | Mpa | 60 | 53 |
| Streckdehnung | ISO 527 | % | 6 | 6 |
| Reissfestigkeit | ISO 527 | Mpa | 45 | 46 |
| Reissdehnung | ISO 527 | % | 120 | 140 |
| Schlagzähigkeit 23°C | ISO 179/2-1eU | J | o.B. | o.B. |
| Schlagzähigkeit-30°C | ISO 179/2-leU | J | o.B. | o.B. |
| Glasübergangstemperatur | ISO/DIS 11357 | °C | 155 | 151 |

| | | | | |
|---|---|---|---|---|
| o.B. : ohne Bruch | | | | |

### Erläuterungen:

FE7334 ist ein Polyesteramid auf Basis Polyamid 12 und Dimerdiol, welche in EP 0955326 B1 beschrieben wird (Glasübergangspunkt Tg = -30°C).

GRILAMID TR 90: ist ein transparentes, thermoplastisch verarbeitbares Polyamid auf der Basis aliphatischer und cycloaliphatischer Bausteine. Es entspricht den in der EP 0 837 087 vorgestellten Systemen, wobei es sich konkret im wesentlichen um ein Homopolyamid des Typs MACM12 (wobei die Ziffer 12 für die Dodekandisäure steht) handelt.

GRILAMID ELY 60 ist ein Polyetheramid, GRILAMID ELY 2475 und 2694 sind Polyetheresteramide der Firma EMS-CHEMIE AG, Schweiz (Tg = -30 bis -50°C).

Tween 20 ist ein Polyoxyethylensorbitansäurefettester, auch Polysorbitat 20 genannt, und ist eine häufig verwendete Anrollhilfe für unterschiedliche Feststoffe.

PEBAX 5533 und 7033 sind Polyamid-12-Blockcopolymere mit Ethersegmenten der ARKEMA, Frankreich (T_{g} = ca. -40°C).

Als photochrome Farbstoffe wurden die NCC^{®}-Farbstoffe OP 14 BLUE und OP 19 RED der Firma New Prismatic Enterprise Co., Ltd., Taiwan, verwendet:

Zudem wurde Polyshine Blue I, erhältlich von der Firma Polychrom Co. Ltd (Korea) als photochromer Farbstoff verwendet.

Weiter wurde als UV-Absorber Tinuvin 326, erhältlich von CIBA SC AG, Schweiz verwendet:

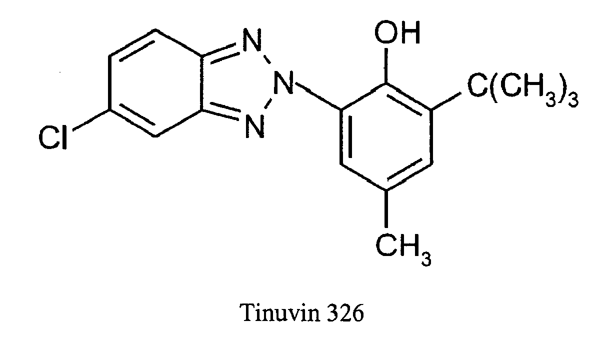

## Patentansprüche

1. Polyamidformmasse enthaltend
wenigstens ein transparentes Homopolyamid und/oder Copolyamid in einem Gewichtsanteil von 50-99 Gew.-%;
wenigstens ein weiteres Polymer mit einem Glasübergangspunkt von weniger als 80 °C in einem Gewichtsanteil von 1-50 Gew.-%;
wenigstens einen photochromen Farbstoff in einem Gewichtsanteil von 0.001 - 2.0 Gew.-%;
sowie optional
weitere Farbstoffe und/oder Additive.

2. Polyamidformmasse nach Anspruch 1, **dadurch gekennzeichnet, dass** das weitere Polymer einen Glasübergangspunkt von weniger als 40°C, bevorzugt von weniger als 25°C aufweist.

3. Polyamidformmasse nach Anspruch 1 oder 2, **dadurch gekennzeichnet, dass** das weitere Polymer einen Glasübergangspunkt von weniger als 0°C, bevorzugt im Bereich von (-60) - (-20) °C aufweist.

4. Polyamidformmasse nach einem der vorhergehenden Ansprüche, **dadurch gekennzeichnet, dass** das weitere Polymer ein Polyamid auf Basis von cycloaliphatischen Diaminen und aliphatischen Dicarbonsäuren mit 6 bis 40 Kohlenstoffatomen handelt, wobei es sich beim cycloaliphatischen Diamin bevorzugt um MACM und/oder PACM und beim Polyamid als Ganzes insbesondere bevorzugt um MACM36 und/oder PACM36 handelt, und/oder dass das weitere Polymer ein Blockcopolymer mit Weichsegmenten ist, wobei bevorzugt die Weichsegmente einen Glasübergangspunkt von weniger als 40°C bevorzugt von weniger als 25° C aufweisen.

5. Polyamidformmasse nach Anspruch 4, **dadurch gekennzeichnet, dass** es sich beim weiteren Polymer um ein Polyamid Blockcopolymeres mit Weichsegmenten, bevorzugt um ein Polyamid-12 Blockcopolymeres handelt, wobei es sich bei den Weichsegmenten bevorzugt um Polyether- und/oder Polyester- und/oder Polysiloxan- und/oder Polyolefin- und/oder Polyacrylat-Weichsegmente handelt, wobei bei den Polyethersegmenten solche bevorzugt sind, die auf den Monomeren Ethylenoxid und/oder Propylenoxid und/oder Tetrahydrofuran basieren.

6. Polyamidformmasse nach einem der vorhergehenden Ansprüche, **dadurch gekennzeichnet, dass** das weitere Polymer ein Polymer ausgewählt aus der folgenden Gruppe ist: Polyester mit Weichsegmenten; TPU-Elastomere mit Weichsegmenten; Acrylatpolymer; Methacrylatpolymer, insbesondere bevorzugt mit langen Seitengruppen; Polycarbonat-Copolymer; Styrol-Copolymer, bevorzugt auf Basis von Acrylnitril, Butadien, Acrylester, Methacrylester; Polyolefin, insbesondere gepfropftes; Ethylencopolymere, insbesondere auf Basis von Propen, Buten, Penten, Hexen, Octen, Decen, Undecen, Butadien, Styrol, Acrylnitril, Isopren, Isobutylen, Derivaten der (Meth)acrylsäure, Vinylacetat, Tetrafluorethylen, Vinylidenfluorid, Hexafluorpropen und 2-Chlorbutadien; Polyisobutylen; Polybutylacrylat sowie Kombinationen und Mischungen davon.

7. Polyamidformmasse nach einem der vorhergehenden Ansprüche, **dadurch gekennzeichnet, dass** das transparente Homopolyamid und/oder Copolyamid in einem Gewichtsanteil von 70-99 Gew.-%, insbesondere bevorzugt in einem Gewichtsanteil von 80-98 Gew.-% vorliegt.

8. Polyamidformmasse nach einem der vorhergehenden Ansprüche, **dadurch gekennzeichnet, dass** das weitere Polymer in einem Gewichtsanteil von 1-30 Gew.-%, insbesondere bevorzugt in einem Gewichtsanteil von 2-20 Gew.-% vorliegt.

9. Polyamidformmasse nach einem der vorhergehenden Ansprüche, **dadurch gekennzeichnet, dass** es sich beim transparenten Homopolyamid und/oder Copolyamid um ein Polyamid auf Basis von cycloaliphatischen Diaminen und aliphatischen Dicarbonsäuren mit 6 bis 36 Kohlenstoffatomen oder eine Mischung solcher Homopolyamide und/oder Copolyamide handelt.

10. Polyamidformmasse nach Anspruch 8, **dadurch gekennzeichnet, dass** es sich bei den cycloaliphatischen Diaminen um MACM und/oder PACM handelt.

11. Polyamidformmasse nach einem der Ansprüche 9 oder 10, **dadurch gekennzeichnet, dass** es sich bei der aliphatischen Dicarbonsäure um eine aliphatische Dicarbonsäure mit 10, 12 oder 18 Kohlenstoffatomen handelt.

12. Polyamidformmasse nach einem der Ansprüche 9 bis 11, **dadurch gekennzeichnet, dass** es sich beim transparenten Polyamid um ein Homopolyamid ausgewählt aus der Gruppe MACM12, MACM 18 und/oder um ein Copolyamid ausgewählt aus der Gruppe MACM12/PACM12, MACM18/PACM18 handelt.

13. Polyamidformmasse nach einem der vorhergehenden Ansprüche, **dadurch gekennzeichnet, dass** es sich beim transparenten Homopolyamid und/oder Copolyamid um ein Polyamid auf Basis von aromatischen Dicarbonsäuren mit 8 bis 18 Kohlenstoffatomen oder eine Mischung solcher Homopolyamide und/oder Copolyamide handelt, bevorzugt auf Basis von Lactamen und/oder Aminocarbonsäuren, wobei es sich bei den aromatischen Dicarbonsäuren bevorzugt um TPS und/oder IPS handelt.

14. Polyamidformmasse nach Anspruch 13, **dadurch gekennzeichnet, dass** es sich beim transparenten Homopolyamid und/oder Copolyamid um ein Polyamid ausgewählt aus der Gruppe: 6I6T, TMDT, 6I/MACMI/MACMT, 6I/6T/MACMI, MACMI/MACM36, 61, 12/PACMI, 12/MACMI, 12MACMT, 6/PACMT, 6/6I,6/IPDT oder eine Mischung davon handelt

15. Polyamidformmasse nach einem der vorhergehenden Ansprüche, **dadurch gekennzeichnet, dass** es sich beim transparenten Homopolyamid und/oder Copolyamid um ein Polyamid auf Basis wenigstens einer Dicarbonsäure und wenigstens eine Diamins mit einem aromatischen Kern handelt, bevorzugt auf Basis von MXD, wobei die Dicarbonsäure aromatisch und/oder aliphatisch sein kann, und wobei es sich bevorzugt um 6I/MXDI handelt.

16. Polyamidformmasse nach einem der vorhergehenden Ansprüche, **dadurch gekennzeichnet, dass** das transparente Homopolyamid und/oder Copolyamid eine Lösungsviskosität (ηᵣₑₗ) zwischen 1.3 und 2.0, insbesondere bevorzugt zwischen 1.40 und 1.85, aufweist und/oder einen Glasübergangspunkt T_{g} oberhalb von 90°C, bevorzugt oberhalb von 110°C, insbesondere bevorzugt oberhalb von 130°C.

17. Polyamidformmasse nach einem der vorhergehenden Ansprüche, **dadurch gekennzeichnet, dass** es sich beim photochromen Farbstoff um einen Farbstoff handelt, welcher reversibel mit UV oder kurzwelligem VIS anregbar ist, wobei es sich bevorzugt um einen Farbstoff auf Basis von Spirooxaazine handelt.

18. Polyamidformmasse nach einem der vorhergehenden Ansprüche, **dadurch gekennzeichnet, dass** es sich bei den Additiven um Stabilisatoren wie UV-Stabilisatoren, Hitzestabilisatoren, Radikalfänger und/oder um Verarbeitungshilfsstoffe, Weichmacher, weitere Polymere und/oder um funktionelle Additive bevorzugt zur Beeinflussung optischer Eigenschaften wie insbesondere des Brechungsindexes oder um Kombinationen oder Mischungen davon handelt.

19. Transparenter, bevorzugt trübungsfreier Gegenstand mit wenigstens einem Bereich oder einer Schicht aus einer Polyamidformmasse nach einem der vorhergehenden Ansprüche.

20. Gegenstand nach dem vorhergehenden Anspruch für hochwertige optische Anwendungen, **dadurch gekennzeichnet, dass** er bei einer Schichtdicke der Schicht aus der Polyamidformmasse von 2 mm eine Transmission von mehr als 70%, bevorzugt von mehr als 80%, in Wellenlängenbereich von 500-700 nm aufweist, und/oder einen Haze von weniger als 5 bevorzugt von weniger als 3.

21. Gegenstand nach Anspruch 19 oder 20, **dadurch gekennzeichnet, dass** es sich um eine Folie, ein Profil, ein Rohr, einen Hohlkörper oder einen optisch variablen Filter oder eine optische Linse handelt, bevorzugt um eine ophthalmische Linse insbesondere bevorzugt um ein Element mit spektraler Filterwirkung wie beispielsweise als Brillenglas, Sonnenlinse, Korrekturlinse, optischer Filter und als Schaltaggregat zur optischen Signalverarbeitung, Skibrille, Visier, Schutzbrille, Fotorecording, Display, optischer Datenspeicher, Fenster von Gebäuden und Fahrzeugen, oder um ein Dekorationselement oder ein Strukturelement wie beispielsweise als Brillenfassung, Spielzeug, Abdeckung, insbesondere als Mobiltelefongehäuse, Teil von elektronischen Geräten, Beschichtung insbesondere von Verpackungen, Dekorationsartikeln, Sportgeräten, Verkleidungen bevorzugt im Automobilbereich.

22. Gegenstand nach einem der Ansprüche 19 - 21, **dadurch gekennzeichnet, dass** der Gegenstand gradientengefärbt ist und/oder eine photochrome Beschichtung, eine Antireflexionsbeschichtung, eine Kratzschutzbeschichtung, eine optische Filterbeschichtung, eine polarisierende Beschichtung, eine Sauerstoffbarrierebeschichtung oder Kombinationen solcher Beschichtungen aufweist.

23. Gegenstand nach einem der Ansprüche 19 -22, **dadurch gekennzeichnet, dass** der Bereich oder die Schicht aus der Polyamidformmasse einen Glasübergangspunkt oberhalb von 90°C, bevorzugt oberhalb von 100°C, insbesondere bevorzugt oberhalb von 130°C, aufweist.

24. Verfahren zur Herstellung eines Gegenstandes nach einem der Ansprüche 19-23, **dadurch gekennzeichnet, dass** eine Polyamidformmasse nach einem der Ansprüche 1 - 18 in einem Extrusionsverfahren, einem Spritzgussverfahren oder einem Hinterspritzen zum Gegenstand geformt wird, wobei der photochrome Farbstoff ggf. in einem nachgeschalteten Tauchbadverfahren und/oder Thermotransferverfahren in die Mischung aus transparentem Polyamid und weiterem Polymer eingebracht werden kann, und wobei es sich beim photochromen Gegenstand auch um eine Folie handeln kann, welche auf einen Träger, bevorzugt eine optische Linse, durch Kaschieren, Laminieren oder Kleben aufgebracht werden kann.

25. Verfahren zur Herstellung eines massegefärbten Formteiles nach Anspruch 23, **dadurch gekennzeichnet, dass** der photochrome Farbstoff zusammen mit dem transparenten Homopolyamid und/oder Copolyamid und dem weiteren Polymer compoundiert wird, wobei der Farbstoff in Form eines flüssigen Konzentrates mit Hilfe einer Dosierpumpe der Polymerschmelze aus transparentem Homopolyamid und/oder Copolyamid und weiterem Polymer zugesetzt werden kann und/oder der Farbstoff als Feststoff auf den übrigen Komponenten aufgetrommelt wird, wobei gegebenenfalls zusätzlich noch Anrollhilfsstoffe zum Einsatz kommen können.

26. Verfahren zur Herstellung eines Masse gefärbten Formteiles nach Anspruch 24, **dadurch gekennzeichnet, dass** der Farbstoff und das weitere Polymere zu einem Masterbatch mit hoher Farbkonzentration von bevorzugt bis 30% verarbeitet wird, und dieser Masterbatch in der erforderlichen Menge mit dem transparenten Polyamid und/oder Copolyamid in einem Extruder zu Granulat verarbeitet wird oder direkt in der Spritzgussmaschine in das fertige Formteil übergeführt wird.

## Claims

1. A polyamide molding composition comprising
a proportion by weight of from 50 to 99% by weight of at least one transparent homopolyamide and/or copolyamide;
a proportion by weight of from 1 to 50% by weight of at least one further polymer whose glass transition temperature is below 80°C;
a proportion by weight of from 0.001 to 2.0% by weight of at least one photochromic dye;
and also, optionally,
further dyes and/or additives.

2. The polyamide molding composition as claimed in claim 1, wherein the glass transition temperature of the further polymer is below 40°C, preferably below 25°C.

3. The polyamide molding composition as claimed in claim 1 or 2, wherein the glass transition temperature of the further polymer is below 0°C, preferably in the range from (-60) - (-20) °C.

4. The polyamide molding composition as claimed in any of the preceding claims, wherein the further polymer is a polyamide based on cycloaliphatic diamines and aliphatic dicarboxylic acids having from 6 to 40 carbon atoms, the cycloaliphatic diamine preferably being MACM and/or PACM, and the entire polyamide particularly preferably being MACM36 and/or PACM36, and/or wherein the further polymer is a block copolymer having soft segments, where the glass transition temperature of the soft segments is preferably below 40°C, preferably below 25°C.

5. The polyamide molding composition as claimed in claim 4, wherein the further polymer is a polyamide block copolymer having soft segments, preferably is a polyamide-12 block copolymer, the soft segments preferably being polyether soft segments and/or polyester soft segments and/or polysiloxane soft segments and/or polyolefin soft segments and/or polyacrylate soft segments, preferred polyether segments being those based on the monomers ethylene oxide and/or propylene oxide and/or tetrahydrofuran.

6. The polyamide molding composition as claimed in any of the preceding claims, wherein the further polymer is a polymer selected from the following group: polyester having soft segments; TPU elastomers having soft segments; acrylate polymer; methacrylate polymer, particularly preferably having long pendent groups; polycarbonate copolymer; styrene copolymer, preferably based on acrylonitrile, butadiene, acrylic esters, methacrylic esters; polyolefin, particularly grafted; ethylene copolymers, particularly based on propene, butene, pentene, hexene, octene, decene, undecene, butadiene, styrene, acrylonitrile, isoprene, isobutylene, derivatives of (meth)acrylic acid, vinyl acetate, tetrafluoroethylene, vinylidene fluoride, hexafluoropropene, and 2-chlorobutadiene; polyisobutylene; polybutyl acrylate, and also combinations and mixtures thereof.

7. The polyamide molding composition as claimed in any of the preceding claims, wherein the proportion by weight present of the transparent homopolyamide and/or copolyamide is from 70 to 99% by weight, particularly preferably from 80 to 98% by weight.

8. The polyamide molding composition as claimed in any of the preceding claims, wherein the proportion by weight present of the further polymer is from 1 to 30% by weight, particularly preferably from 2 to 20% by weight.

9. The polyamide molding composition as claimed in any of the preceding claims, wherein the transparent homopolyamide and/or copolyamide is a polyamide based on cycloaliphatic diamines and on aliphatic dicarboxylic acids having from 6 to 36 carbon atoms or is a mixture of such homopolyamides and/or copolyamides.

10. The polyamide molding composition as claimed in claim 8, wherein the cycloaliphatic diamines are MACM and/or PACM.

11. The polyamide molding composition as claimed in claim 9 or 10, wherein the aliphatic dicarboxylic acid is an aliphatic dicarboxylic acid having 10, 12, or 18 carbon atoms.

12. The polyamide molding composition as claimed in any of claims 9 to 11, wherein the transparent polyamide is a homopolyamide selected from the group of MACM12, MACM18 and/or is a copolyamide selected from the group of MACM12/PACM12, MACM18/PACM18.

13. The polyamide molding composition as claimed in any of the preceding claims, wherein the transparent homopolyamide and/or copolyamide is a polyamide based on aromatic dicarboxylic acids having from 8 to 18 carbon atoms, or is a mixture of such homopolyamides and/or copolyamides, preferably based on lactams and/or aminocarboxylic acids, the aromatic dicarboxylic acids preferably being TPA and/or IPA.

14. The polyamide molding composition as claimed in claim 13, wherein the transparent homopolyamide and/or copolyamide is a polyamide selected from the group of: 6I6T, TMDT, 6I/MACMI/MACMT, 6I/6T/MACMI, MACMI/MACM36, 61, 12/PACMI, 12/MACMI, 12MACMT, 6/PACMT, 6/6I,6/IPDT, or a mixture thereof.

15. The polyamide molding composition as claimed in any of the preceding claims, wherein the transparent homopolyamide and/or copolyamide is a polyamide based on at least one dicarboxylic acid and on at least one diamine having an aromatic ring, preferably based on MXD, where the dicarboxylic acid can be aromatic and/or aliphatic, the material preferably being 6I/MXDI.

16. The polyamide molding composition as claimed in any of the preceding claims, wherein the solution viscosity (ηᵣₑₗ) of the transparent homopolyamide and/or copolyamide is from 1.3 to 2.0, particularly preferably from 1.40 to 1.85, and/or its glass transition temperature Tg is above 90°C, preferably above 110°C, particularly preferably above 130°C.

17. The polyamide molding composition as claimed in any of the preceding claims, wherein the photochromic dye is a dye which is reversibly excitable with UV or short-wave VIS, preferably being a dye based on spirooxazines.

18. The polyamide molding composition as claimed in any of the preceding claims, wherein the additives are stabilizers, such as UV stabilizers, heat stabilizers, or free-radical scavengers, and/or are processing aids, plasticizers, or further polymers, and/or are functional additives, preferably for influencing optical properties, e.g. particularly refractive index, or are a combination or mixture thereof.

19. A transparent, preferably haze-free article having at least one region or one layer composed of a polyamide molding composition as claimed in any of the preceding claims.

20. An article as claimed in the preceding claim for high-specification optical applications, whose transmittance is more than 70%, preferably more than 80%, in the wavelength range from 500 to 700 nm, and/or whose haze is less than 5, preferably less than 3, for a thickness of the layer composed of the polyamide molding composition of 2 mm.

21. The article as claimed in claim 19 or 20, which is a foil, a profile, a tube, a hollow body, or an optically variable filter or an optical lens, preferably is an ophthalmic lens, particularly preferably is an element with spectral filter action, for example in the form of a spectacle lens, sun lens, corrective lens, or optical filter, or in the form of a switching assembly or optical signal processing, ski goggles, visor, safety spectacles, photorecording, display, optical data storage, or windows of buildings and of vehicles, or is a decorative element or a structural element, for example in the form of a spectacle frame, toy, or cover, particularly in the form of a mobile-telephone case, a part of electronic devices, a coating, particularly of packaging, of decorative items, of sports equipment, or of cladding, preferably in the automobile sector.

22. The article as claimed in any of claims 19 to 21, which has a color gradient and/or has a photochromic coating, an antireflective coating, a scratch-resistant coating, an optical filter coating, a polarizing coating, an oxygen-barrier coating, or a combination of such coatings.

23. The article as claimed in any of claims 19 to 22, wherein the glass transition temperature of the region or the layer composed of the polyamide molding composition is above 90°C, preferably above 100°C, particularly preferably above 130°C.

24. The process for production of an article as claimed in any of claims 19 to 23, which comprises molding a polyamide molding composition as claimed in any of claims 1 to 18 in an extrusion process, in an injection-molding process, or in an in-mold-coating process, to give the article, where the photochromic dye can, if appropriate, be introduced in a downstream immersion-bath process and/or thermal transfer process into the mixture composed of transparent polyamide and of further polymer, and where the photochromic article can also be a foil which can be applied to a substrate, preferably an optical lens, via lamination or adhesive bonding.

25. The process for production of a bulk-colored molding as claimed in claim 23, which comprises compounding the photochromic dye together with the transparent homopolyamide and/or copolyamide and with the further polymer, where the dye can be added in the form of a liquid concentrate to the polymer melt composed of transparent homopolyamide and/or copolyamide and further polymer with the aid of a metering pump, and/or the dye is applied in the form of solid to the other components in a drum mixer, and where use may also be made, if appropriate, of application aids.

26. The process for production of a bulk-colored molding, as claimed in claim 24, wherein the dye and the further polymer are processed to give a masterbatch with high color concentration which is preferably up to 30%, and the required amount of this masterbatch is processed with the transparent polyamide and/or copolyamide in an extruder to give pellets or is converted directly into the finished molding in the injection-molding machine.

## Revendications

1. Matière à mouler polyamide contenant
au moins un homopolyamide et/ou un copolyamide transparents en une quantité allant de 50 à 99 % en poids ;
au moins un autre polymère avec une température de transition vitreuse inférieure à 80 °C en une quantité allant de 1 à 50 % en poids ;
au moins un colorant photochrome en une quantité allant de 0,001 à 2,0 % en poids ; ainsi que, de manière facultative,
d'autres colorants et/ou additifs.

2. Matière à mouler polyamide selon la revendication 1, **caractérisée en ce que** l'autre polymère a une température de transition vitreuse inférieure à 40 °C, de préférence inférieure à 25 °C.

3. Matière à mouler polyamide selon la revendication 1 ou 2, **caractérisée en ce que** l'autre polymère a une température de transition vitreuse inférieure à 0 °C, de préférence dans la plage allant de (-60) à (-20) °C.

4. Matière à mouler polyamide selon l'une quelconque des revendications précédentes, **caractérisée en ce que** l'autre polymère est un polyamide à base de diamines cycloaliphatiques et d'acides dicarboxyliques aliphatiques avec de 6 à 40 atomes de carbone, la diamine cycloaliphatique étant de préférence un MACM et/ou un PACM et le polyamide en tant que tel étant de préférence un MACM36 et/ou un PACM36, et/ou **caractérisé en ce que** l'autre polymère est un copolymère bloc avec des segments souples, les segments souples ayant de préférence une température de transition vitreuse inférieure à 40 °C, de préférence inférieure à 25 °C.

5. Matière à mouler polyamide selon la revendication 4, **caractérisée en ce que** l'autre polymère est un copolymère bloc de polyamide avec des segments souples, de préférence un copolymère bloc de polyamide 12, les segments souples étant de préférence des segments souples polyéther et/ou polyester et/ou polysiloxane et/ou polyoléfine et/ou polyacrylate, sachant que les segments polyéther sont de préférence ceux à base d'oxyde d'éthylène et/ou d'oxyde de propylène et/ou de tétrahydrofurane.

6. Matière à mouler polyamide selon l'une quelconque des revendications précédentes, **caractérisée en ce que** l'autre polymère est choisi dans le groupe suivant : polyester avec des segments souples ; élastomère TPU avec des segments souples ; polyacrylate ; polyméthacrylate, de manière particulièrement préférée avec des groupes latéraux à chaîne longue ; copolymère de polycarbonate ; copolymère de styrène, de préférence à base d'acrylonitrile, de butadiène, d'ester acrylique, d'ester méthacrylique ; polyoléfine, en particulier greffée ; copolymère d'éthylène, en particulier à base de propène, de butène, de pentène, d'hexène, d'octène, de décène, d'undécène, de butadiène, de styrène, d'acrylonitrile, d'isopropène, d'isobutylène, de dérivés d'acide méthacrylique, d'acétate de vinyle, de tétrafluoréthylène, de fluorure de vinylidène, d'hexafluoropropylène et de 2-chlorobutadiène ; polyisobutylène ; polybutacrylate ainsi que des combinaisons et des mélanges de ces composés.

7. Matière à mouler polyamide selon l'une quelconque des revendications précédentes, **caractérisée en ce que** l'homopolyamide et/ou le copolyamide transparents sont présents en une quantité allant de 70 à 99 % en poids, de manière particulièrement préférée en une quantité allant de 80 à 98 % en poids.

8. Matière à mouler polyamide selon l'une quelconque des revendications précédentes, **caractérisée en ce que** l'autre polymère est présent en une quantité allant de 1 à 30 % en poids, de manière particulièrement préférée en une quantité allant de 2 à 20 % en poids.

9. Matière à mouler polyamide selon l'une quelconque des revendications précédentes, **caractérisée en ce que** l'homopolyamide et/ou le copolyamide transparents sont un polyamide à base de diamines cycloaliphatiques et d'acides dicarboxyliques aliphatiques avec de 6 à 36 atomes de carbone ou un mélange de tels homopolyamides et/ou copolyamides.

10. Matière à mouler polyamide selon la revendication 8, **caractérisée en ce que** l'amine cycloaliphatique est le MACM et/ou le PACM.

11. Matière à mouler polyamide selon l'une des revendications 9 ou 10, **caractérisée en ce que** l'acide dicarboxylique aliphatique est un acide dicarboxylique aliphatique avec 10, 12 ou 18 atomes de carbone.

12. Matière à mouler polyamide selon l'une quelconque des revendications 9 à 11, **caractérisée en ce que** le polyamide transparent est un homopolyamide choisi dans le groupe MACM12, MACM18 et/ou est un copolyamide choisi dans le groupe MACM12/PACM12, MACM18/PACM18.

13. Matière à mouler polyamide selon l'une quelconque des revendications précédentes, **caractérisée en ce que** l'homopolyamide et/ou le copolyamide transparents sont des polyamides à base d'acides dicarboxyliques aromatiques avec de 8 à 18 atomes de carbone ou un mélange de tels homopolyamides et/ou copolyamides, de préférence à base de lactames et/ou d'acides aminocarboxyliques, les acides dicarboxyliques aromatiques étant de préférence le TPS et/ou le IPS.

14. Matière à mouler polyamide selon la revendication 13, **caractérisée en ce que** l'homopolyamide et/ou le copolyamide transparents sont des polyamides choisis dans le groupe: 6I6T, TMDT, 6I/MACMI/MACMT, 6I/6T/MACMI, MACMI/MACM36, 6I, 12/PACMI, 12/MACMI, 12MACMT, 6/PACMT, 6/6I, 6/IPDT ou un mélange de ces composés.

15. Matière à mouler polyamide selon l'une quelconque des revendications précédentes, **caractérisée en ce que** l'homopolyamide et/ou le copolyamide transparents sont des polyamides à base d'au moins un acide dicarboxylique et d'au moins une diamine avec un noyau aromatique, de préférence à base de MXD, l'acide dicarboxylique pouvant être aromatique et/ou aliphatique et étant de préférence 6I/MXDI.

16. Matière à mouler polyamide selon l'une quelconque des revendications précédentes, **caractérisée en ce que** l'homopolyamide et/ou le copolyamide transparents ont une viscosité en solution (ηᵣₑₗ) comprise entre 1,3 à 2,0, de manière particulièrement préférée comprise entre 1,40 et 1,85 et/ou une température de transition vitreuse Tg supérieure à 90 °C, de préférence supérieure à 110 °C, de manière particulièrement préférée supérieure à 130 °C.

17. Matière à mouler polyamide selon l'une quelconque des revendications précédentes, **caractérisée en ce que** le colorant photochrome est un colorant qui peut être excité de manière réversible avec un rayonnement UV ou visible dans les ondes courtes, le colorant étant de préférence à base de spirooxazine.

18. Matière à mouler polyamide selon l'une quelconque des revendications précédentes, **caractérisée en ce que** les additifs sont des agents stabilisants tels que les stabilisants UV, stabilisants thermiques, pièges à radicaux et/ou des adjuvants de mise en oeuvre, des plastifiants, d'autres polymères et/ou des additifs fonctionnels de préférence pour influencer les propriétés optiques, en particulier l'indice de réfraction ou une combinaison ou un mélange de ces composés.

19. Article transparent, de préférence exempt de trouble avec au moins une zone ou une couche en une matière à mouler polyamide selon l'une quelconque des revendications précédentes.

20. Article selon la revendication précédente destiné à des applications optiques de haute qualité, **caractérisé en ce qu'**il comporte, pour une épaisseur de la couche de matière à mouler polyamide de 2 mm, une transmission de plus de 70 %, de préférence de plus de 80 %, pour une longueur d'onde allant de 500 à 700 nm, et/ou un indice de trouble inférieur à 5, de préférence inférieur à 3.

21. Article selon la revendication 19 ou 20, **caractérisé en ce qu'**il s'agit d'une feuille, d'un profilé, d'un tube, d'un corps creux ou d'un filtre optique variable ou d'une lentille optique, de préférence d'une lentille ophtalmique, de manière particulièrement préférée d'un élément à effet de filtre spectral tel que des verres de lunettes, des lentilles solaires, des lentilles correctrices, des filtres optiques et en tant qu'unité de commutation pour le traitement optique de signaux, des lunettes de ski, des visières, des lunettes de protection, des systèmes de photoenregistrement, des systèmes d'affichage, des mémoires optiques, des fenêtres de bâtiments et de véhicules, ou il s'agit d'un élément de décoration ou d'un élément structurel tel qu'une monture de lunette, un jouet, un couvercle, en particulier un boîtier de téléphone portable, une partie d'un appareil électronique, un revêtement en particulier d'emballages, d'articles de décoration, d'appareils de sport, d'habillages, de préférence dans le domaine automobile.

22. Article selon l'une quelconque des revendications 19 à 21, **caractérisé en ce qu'**il est coloré par un gradient de couleur et/ou comporte une couche photochrome, une couche anti-reflet, une couche de protection contre les rayures, un couche de filtre optique, une couche polarisante, une couche barrière pour l'oxygène ou une combinaison de telles couches.

23. Article selon l'une quelconque des revendications 19 à 22, **caractérisé en ce que** la zone ou la couche en matière à mouler polyamide a une température de transition vitreuse supérieure à 90 °C, de préférence supérieure à 100 °C, de manière particulièrement préférée supérieure à 130 °C.

24. Procédé de fabrication d'un article selon l'une quelconque des revendications 19 à 23, **caractérisé en ce qu'**une matière à mouler polyamide selon l'une quelconque des revendications 1 à 18 est mise sous la forme d'un article par un procédé d'extrusion, un procédé d'injection-moulage ou un procédé de surmoulage par injection, le colorant photochrome pouvant être introduit le cas échéant par un procédé d'immersion et/ou un procédé de transfert thermique ultérieurs dans le mélange de polyamide transparent et de l'autre polymère, l'article photochrome pouvant aussi être une feuille, laquelle peut être appliquée sur un support, de préférence une lentille optique, par gainage, stratification ou collage.

25. Procédé de fabrication d'un article teinté dans la masse selon la revendication 23, **caractérisé en ce que** le colorant photochrome est mélangé avec l'homopolyamide et/ou le copolyamide transparents et l'autre polymère, le colorant pouvant être ajouté sous la forme d'un concentré liquide à l'aide d'une pompe de dosage, au polymère fondu d'homopolyamide et/ou de copolyamide transparents et de l'autre polymère et/ou le colorant est ajouté au tonneau en tant que substance solide sur les composants restants, sachant que, le cas échéant, des adjuvants de roulement peuvent être utilisés.

26. Procédé pour la fabrication d'un article teinté dans la masse selon la revendication 24, **caractérisé en ce que** le colorant et l'autre polymère sont mis sous forme d'un mélange-maître à concentration élevée en colorant allant de préférence jusqu'à 30 %, et ce mélange-maître est mélangé en une quantité appropriée avec le polyamide et/ou le copolyamide transparents dans une extrudeuse et mis sous forme de granulés ou est transformé directement, dans la presse à injecter, en l'article final.
